(19) Europäisches Patentamt
European Patent Office
Office européen des brevets

(11) Publication number: **0 079 632**
**B1**

(12) **EUROPEAN PATENT SPECIFICATION**

(45) Date of publication of patent specification: **26.11.86**

(51) Int. Cl.[4]: **C 08 L 53/02,** C 08 L 35/06, C 08 L 67/02, C 08 L 67/04

(21) Application number: **82201328.0**

(22) Date of filing: **25.10.82**

(54) **Thermoplastic moulding composition.**

(30) Priority: **16.11.81 US 321647**

(43) Date of publication of application: **25.05.83 Bulletin 83/21**

(45) Publication of the grant of the patent: **26.11.86 Bulletin 86/48**

(84) Designated Contracting States: **BE DE FR GB IT NL SE**

(56) References cited: **GB-A-2 053 238**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Durbin, Daniel Paul**
**807 Palm Grove Circle**
**Sugarland, TX 77478 (US)**
Inventor: **Danforth, Richard Louis**
**2306 Wallingford Drive**
**Missouri City, TX 77459 (US)**
Inventor: **Lutz, Robert Gardiner**
**8322 Twining Oaks**
**Spring, TX 77379 (US)**

(74) Representative: **Aalbers, Onno et al**
**P.O. Box 302**
**NL-2501 CH The Hague (NL)**

**EP 0 079 632 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a thermoplastic moulding composition comprising:—

a) a vinylaromatic copolymer comprising a vinylaromatic compound and an α,β-unsaturated cyclic anhydride, and

b) a thermoplastic polyester having a molecular weight in excess of 20,000 and selected from the group consisting of a condensation product of a dicarboxylic acid and a glycol, pivalolactone homopolymer and copolymer and polycaprolactone and

c) a modified block copolymer comprising vinylaromatic and diene blocks

Vinylaromatic resins, such as polystyrene or high impact polystyrene have been found to be useful in thermoplastic moulding compositions. However, such vinylaromatic resins have poor heat distortion and impact resistance. One approach to improve these property deficiencies involves copolymerizing the vinylaromatic compound with an α,β-unsaturated cyclic anhydride, to form copolymers such as poly(styrene-maleic anhydride). Although compositions comprising such copolymers and also comprising a thermoplastic polyester of the kind described hereinbefore have improved heat resistance, the overall balance of properties is still inadequate.

U.S. Patent Specifications 4,124,654 and 4,243,766 disclose compositions comprising a copolymer of a vinylaromatic compound with an α,β-unsaturated cyclic anhydride, a hydrogenated styrene-diene block copolymer and optionally a polyphenylene ether resin, in order to further improve the properties of these vinylaromatic copolymers. These polymer blend compositions exhibit a balance of properties, which needs to be improved.

Thermoplastic moulding compositions to which the invention relates are known from GB—PA—2 053 238. Compound C, the modified block copolymer, is incorporated into these known compositions containing the compounds A and B to improve the processability of the compositions.

A new thermoplastic moulding composition with an unexpectedly improved balance of properties has now been found.

Accordingly, the present invention provides a thermoplastic moulding composition comprising:—

a) 10 to 80% by weight of a vinylaromatic copolymer comprising a vinylaromatic compound and an α,β-unsaturated cyclic anhydride, and

b) 10 to 80% by weight of a thermoplastic polyester having a molecular weight in excess of 20,000 and selected from the group consisting of a condensation product of a dicarboxylic acid and a glycol, pivalolactone homopolymer and copolymer and polycaprolactone, having a melting point over 120°C, and

c) 10 to 80% by weight of a modified block copolymer comprising vinylaromatic and diene blocks characterized in that the composition comprises a selectively hydrogenated block copolymer C, comprising at least two monoalkenylarene polymer end blocks A and at least one hydrogenated conjugated diene polymer mid block B, wherein the weight per cent of blocks A is between 8 and 65 per cent by weight of the block copolymer and wherein the block B has been hydrogenated substantially completely.

The compositions according to the invention are not only readily processable into moulded articles, but possess good low temperature (−29°C) properties, and are also directly paintable with commercial paints and have low distortion during the paint bake cycle (121°C, 30 minutes). Further, these compositions have excellent gloss, making them prime candidates for exterior automotive applications. Still further the impact/stiffness relationship shows unexpectedly that it is possible to even increase stiffness without reducing impact at constant oil content.

The block copolymers employed in the present invention may be linear ABA, radial $(AB)_x$—BA or branched so long as each copolymer has at least two polymer end blocks A and at least one polymer mid block B. It is preferred that the selectively hydrogenated block copolymer is a radial $(AB)_x$—BA block copolymer. Methods for the preparation of such polymers are known in the art. Particular reference is made to the use of lithium-based catalysts and especially lithium-alkyls for the preparation of the polymers before hydrogenation. U.S. Patent Specification 3,595,942 not only describes some of the polymers present in the composition according to the instant invention but also describes suitable methods for their hydrogenation. The structure of the polymers is determined by the method of polymerization. For example, linear polymers result by sequential introduction of the desired monomers into the reaction vessel when using such initiators as lithium-alkyls or dilithiostilbene and the like, or by coupling a two-segment block coplymer with a difunctional coupling agent. Branched structures, on the other hand, may be obtained by the use of suitable coupling agents having a functionality of three or more. Coupling may be effected with multifunctional coupling agents, such as dihaloalkanes or -alkenes and divinylbenzene as well as certain polar compounds, such as silicon halides, siloxanes or esters of monohydric alcohols with carboxylic acids. The presence of any coupling residues in the polymer may be ignored for an adequate description of the polymers forming a part of the compositions of this invention. The invention applies especially to the presence of selectively hydrogenated polymers having the configuration before hydrogenation of the following typical species:

polystyrene-polybutadiene-polystyrene (SBS)
polystyrene-polyisoprene-polystyrene (SIS)
poly(alpha-methylstyrene)-polybutadiene-poly-(alpha-methylstyrene), and
poly(alpha-methylstryene)-polyisoprene-poly-(alpha-methylstyrene)

It will be understood that both blocks A and B may be either homopolymer of random copolymer blocks as long as each block predominates in at least one class of the monomers characterizing the blocks and as long as the A blocks individually predominate in monovinylaromatics and the B blocks individually predominate in dienes. Examples of monovinylaromatic compounds are styrene and its analogues and homologues including alphamethylstyrene and ring-substituted styrenes, particularly ring-methylated styrenes. The preferred monovinylaromatic compounds are styrene and alpha-methylstyrene, and styrene is particularly preferred. The blocks B may comprise homopolymers of butadiene or isoprene and copolymers of one of these two dienes with a monovinylaromatic compound as long as the blocks B predominate on conjugated diene units. When the monomer employed is butadiene, it is preferred that between 35 and 55 mol per cent of the condensed butadiene units in the butadiene polymer block have 1,2-configuration. Thus, when such a block is hydrogenated, the resulting product is, or resembles, a regular copolymer block of ethylene and butene-1 (EB). If the conjugated diene employed is isoprene, the resulting hydrogenated product is or resembles a regular copolymer block of ethylene and propylene (EP).

Hydrogenation of the precursor block copolymers is preferably effected by use of a catalyst comprising the reaction products of an aluminium-alkyl compound with nickel or cobalt carboxylates or alkoxides under such conditions as to hydrogenate at least 80% of the aliphatic double bonds while hydrogenating no more than about 25% of the alkenyl arene aromatic double bonds. Preferred block copolymers are those where at least 99% of the aliphatic double bonds are hydrogenated while less than 5% of the aromatic double bonds are hydrogented.

The average molecular weights of the individual blocks may vary within certain limits. In most instances, the monovinylaromatic blocks will have number average molecular weights from 5,000 to 125,000, preferably from 7,000 to 60,000 while the conjugated diene blocks either before or after hydroganation will have average molecular weights from 10,000 to 300,000, preferably from 30,000 to 150,000. The total average molecular weight of the block copolymer is from 25,000 to 250,000, preferably from 35,000 to 200,000. These molecular weights are most accurately determined by tritium counting methods or osmotic pressure measurements.

The proportion of the mono vinylaromatic blocks should be between 8 and 65% by weight of the block copolymer, preferably between 10 and 30% by weight.

While the average molecular weight of the individual blocks is not critical, at least within the above specified limits, it is useful to select the type and total molecular weight of the block copolymer in order to obtain the necessary mixing under the chosen blending conditions. Best results are obtained when the viscosity of the block copolymer and the other thermoplastic resins are substantially the same at the temperature used for blending and processing. In some instances, matching of the viscosity of the block copolymer portion and the resin portions are best achieved by using two or more block copolymers or resins. For example, a blend of two block copolymers having different molecular weights or a blend of a hydrogenated SBS and hydroganated SIS polymers may be employed.

The copolymers of the vinylaromatic compounds and the α,β-unsaturated cyclic anhydride are known in the art. The vinylaromatic component may be derived from compounds of the formula:

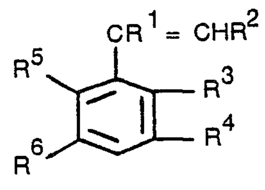

wherein $R^1$ and $R^2$ are selected from the group consisting of lower alkyl or alkenyl groups of from 1 to 6 carbon atoms and hydrogen; $R^3$ and $R^4$ are selected from the group consisting of chloro, bromo, hydrogen and lower alkyl groups having from 1 to 6 carbon atoms; $R^5$ and $R^6$ are selected from the group consisting of hydrogen and lower alkyl and alkenyl groups having from 1 to 6 carbon atoms or $R^5$ and $R^6$ may be concatenated together with hydrocarbyl groups to form a naphthyl group. These compounds are free of any substituent that has a tertiary carbon atom. Styrene is the preferred vinylaromatic compound. The α,β-unsaturated cyclic anhydrides include maleic anhydride, citraconic anhydride, itaconic anhydride, aconitic anhydride and the like. The preferred α.β-unsaturated cyclic anhydride is maleic anhydride.

The polymers may comprise 40 to 1 mol per cent of the α,β-unsaturated cyclic anhydride and from 60 to 99 mol per cent a vinylaromatic compound. The preferred polymers will contain about 25—5 mol per cent of the α,β-unsaturated cyclic anhydride and 75—95 mol per cent of the vinylaromatic compound. The preparation of these copolymers is known per se. A much preferred copolymer is Dylark® 332. This is a styrenemaleic anhydride copolymer containing about 8 mol.% maleic anhydride, the balance being styrene.

The thermoplastic polyesters employed in the present invention have a generally crystalline structure, a melting point over about 120°C, and are thermoplastic as opposed to thermosetting.

One particularly useful group of polyesters are those theremoplastic polyesters prepared by condensing a dicarboxylic acid or the lower alkyl ester, acid halide, or anhydride derivatives thereof with a glycol, according to methods wellknown in the art.

Among the aromatic and aliphatic dicarboxylic acids suitable for preparing polyesters useful in the present invention are oxalic acid, malonic acid, succinic acid, glutaric acid, adipic acid, suberic acid, azelaic acid, sebacic acid, terephthalic acid, isophthalic acid, p-carboxyphenylacetic acid, p,p'-dicarboxydiphenyl, p,p'-dicarboxydiphenylsulphone, p-carboxyphenoxyacetic acid, p-carboxyphenoxypropionic acid, p-carboxyphenoxybutyric acid, p-carboxyphenoxyvaleric acid, p-carboxyphenoxyhexanoic acid, p.p'dicarboxydiphenyloctane, 3-alkyl-4-(β-carboxyethoxy)benzoic acid, 2,6-naphthalene dicarboxylic acid, 2,7-naphthalene dicarboxylic acid, and the like. Mixtures of dicarboxylic acids can also be employed. Terephthalic acid is particularly preferred.

The glycols suitable for preparing the polyesters useful in the present invention include straight-chain alkylene glycols of 2 to 12 carbon atoms, such as ethylene glycol, 1,3-propylene glycol, 1,6-hexylene glycol, 1,10-decamethylene glycol and 1,12-dodecamethylene glycol. Aromatic glycols can be substituted in whole or in part. Suitable aromatic dihydroxy compounds include p-xylylene glycol, pyrocatechol, resorcinol, hydroquinone or alkyl-substituted derivatives of these compounds. Another suitable glycol is 1,4-cyclohexane dimethanol. Much preferred glycols are the straight-chain alkylene glycols having 2 to 4 carbon atoms.

A preferred group of polyesters are poly(ethylene terephthalate), poly(propylene terephthalate), and poly(butylene terephthalate). A much preferred polyester is poly(butylene terephthalate). Poly(butylene terephthalate), a crystalline copolymer, may be formed by the polycondensation of 1,4-butanediol and dimethylterephthalate or terephthalic acid, and has the generalized formula:

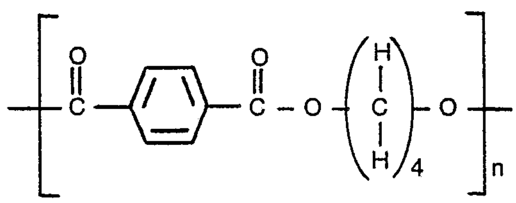

where n varies from 70 to 140. The molecular weight of the poly(butylene terephthalate) typically varies from about 20,000 to about 25,000. The manufacture of such polymers is known per se.

Another useful polyester is polypivalolactone. Polypivalolactone is a linear polymer having recurring ester structural units mainly of the formula:

$$—CH_2—C(CH_3)_2—C(O)O—$$

i.e., units derived from pivalolactone. Preferably, the polyester is a pivalolactone homopolymer. Also included, however, are the copolymers of pivalolactone with not more than 50 mol per cent, preferably not more than 10 mol per cent of other beta-propiolactones, such as beta-propiolactone, alpha, alphadiethyl-beta-propiolactone and alpha-methyl-alpha-ethyl-betapropiolactone. The term "beta-propiolactones" refers to betapropiolactone (2-oxetanone) and to derivatives thereof which carry no substitutes at the beta-carbon atoms of the lactone ring. Preferred beta-propiolactones are those containing a tertiary or quaternary carbon atom in the alpha-position relative to the carbonyl group. Especially preferred are the alpha, alpha-dialkyl-beta-propiolactones wherein each of the alkyl groups independently has from one to four carbon atoms. Examples of useful monomers are:

alpha-ethyl-alpha-methyl-beta-propiolactone,
alpha-methyl-alpha-isopropyl-beta-propoplactone,
alpha-ethyl-alpha-n-butyl-beta-propiolactone,
alpha-chloromethyl-alpha-methyl-beta-propiolactone,
alpha, alpha-bis(chloromethyl)-beta-propiolactone, and
alpha, alpha-dimethyl-beta-propiolactone (pivalolactone).

These polypivalolactones have a molecular weight in excess of 20,000 and a melting point in excess of 120°C.

Another useful polyester is polycaprolactone. Typical poly(ε-caprolactones) are substantially linear polymers in which the repeating unit is

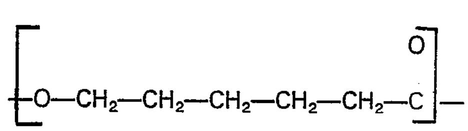

These polymers have similar properties to the polypivalolactones and may be prepared by a similar polymerization mechanism.

The polymer blends of the instant invention may be compounded further with other polymers, oils, fillers, reinforcements, anti-oxidants, stabilizers, fire retardants, anti-blocking agents and other rubber and plastic compounding ingredients.

In some cases it may be advantageous to add certain hydrocarbon oils like those polymer-extending oils ordinarily used in the processing of rubber and plastics, e.g. rubber compounding oils. Especially preferred are the types of oil that are compatible with the elastomeric segment of the block copolymer. WHile oils of higher aromatics content are satisfactory, those petroleum-based white oils having low volatility and less than 50% aromatics content as determined by the clay gel method of tentative ASTM method D 2007 are particularly preferred. The oils should additionally have low volatility, preferably having an initial boiling point above 260°C.

Examples of various fillers that can be employed are disclosed in the 1971—1972 Modern Plastics Encyclopedia, pages 240—247. Reinforcements are also very useful in the present polymer blends. A reinforcement may be defined simply as the material that is added to a resinous matrix to improve the strength of the polymer. Most of these reinforcing materials are inorganic or organic products of high molecular weight. Various examples include glass fibres asbestos, boron fibres, carbon and graphite fibres, whiskers, quartz and silica fibres, ceramic fibres, metal fibres, natural organic fibres, and synthetic organic fibres, Especially preferred are reinforced polymer blends containing 2 to 80 per cent by weight of reinforcing material based on the total weight of the resulting reinforced blend.

The relative proportions of the polymers are presented below in per cent by weight:

| | | Preferred |
|---|---|---|
| Selectively hydrogenated block copolymer | 10 to 80 | 30 to 70 |
| Vinyl aromatic copolymer | 10 to 80 | 15 to 40 |
| Thermoplastic polyester | 10 to 80 | 15 to 40 |

The blending of the various polymer components may be done in any manner that produces a blend which will not delaminate on processing. For example, the various polymers may be dissolved in a solvent common for all and coagulated by admixing in a solvent in which one of the polymers are soluble. But more preferably, a particularly useful procedure is to intimately mix the polymers in the form of granules and/or powder in a high shear mixer. Intimate mixing is typically achieved by employing high shear extrusion compounding-machines such as twin screw compounding extruders and thermoplastic extruders having at least a 20:1 L/D ratio and a compression ratio of 3 or 4:1.

The mixing or processing temperature (Tp) is selected in accordance with the particular polymers to be blended. For example, when melt blending the polymers instead of solution blending, it will be necessary to select a processing temperature above the melting point of the highest melting point polymer. In addition, the processing temperature may also be chosen so as to permit the isoviscous mixing of the polymers. Typically, the mixing or processing temperature is between 200°C and 350°C. For blends containing poly(butylene terephthalate) Tp is preferably between 240°C and 300°C.

The polymer blends of the present invention can be employed in any use typically performed by engineering thermoplastics, such as metal replacement and those areas where high performance is necessary. A particularly useful end use area is for exterior decorated automotive applications.

To illustrate the instant invention, the following example is given.

The physical test methods used in evaluation of the blends appearing in Tables Ia and Ib of the application are as follows:

−29°C Cold Impact Strength — Gardner Impact Test;
Stiffness — Tinius Olsen Stiffness Test, ASTM D—747;
Hardness — Shore Durometer, Type D—2 both instantaneous and 10-second reading are given;
Angle Tear — Die C ASTM D—624;
Tensile Properties — Die D, ASTM D—412;
Paint Adhesion Tests — Cross-Hatch tape adhesion test per Ford method BI 6—I.

Example

Various polymer blends were prepared. All blends except blends 1, 2, 3, 4 and 5 are according to the invention. The blends according to the invention were prepared by first dry blending the various component particles, and then extruding the resulting mixture in a Werner-Pflederer extruder at a temperature above 240°C.

The three block copolymer components are selectively hydrogenated SBS block copolymers, which polymers are according to the invention and which vary in molecular weight and per cent styrene. Two different stryrene-maleic anhydride copolymers (SMA) were employed. SMA/1 is Dylark® 232 and SMA/2 is Dylark® 332. These differ by the percentage of maleic anhydride incorporated into the copolymere Dylark®

232 possessing about 6 mol.% maleic anhydride. Some of the blends contain other components such as a hydrocarbon rubber extending oil, and EPDM rubber (ethylene-propylene-diene monomer terpolymer) or an LDPE resin (low density polyethylene). All blends contain a standard anti-oxidant. The various formulations and resulting properties are presented below in Tables Ia and Ib. As shown in the Tables, binary resin blends of block copolymers and SMA/1 copolymers (Blends: 1, 2, 3, 4 and 5) possess excellent cold impact strength at high stiffness, and were found to be directly paintable with a commercial elastomeric enamel paint. However, these binary blends were not capable of withstanding a 30 minute, 121°C bake cycle, required for curing the paint system without distortion. Significant improvements in the heat resistance of the compounds were found with the addition of poly(butylene terephthalate), PBT resin (Blends: 6, 7) and PBT resin and a filler (Blend 8) into the polymeric compound.

Heat resistance compounds were found through incorporation of a higher percentage maleic anhydride SMA (SMA/2) copolymer (Blends: 9, 10, 16). Variations of the stiffness, impact strength, and the other physical properties were made through additions of oil (Blends: 11, 12, 13, 17, 18, 21, 22 and 23), EPDM (Blends: 14, 15, 19 and 20) and LDPE (Blends: 11, 12 and 13). In all cases, excellent heat resistance during the 121°C, 30 minute bake cycle, along with direct paint adhesion was found.

Some of the data are also presented in the attached drawing. The drawing depicts cold impact strength (vertical axis, in kg.m/m) versus stiffness relationships (horizontal axis, in $kg.cm^{-2}/rad$) of the SMA/PBT/block copolymer blends. One series is at constant oil content of 5% (represented by the closed squares) varying the stiffness of the compound by replacing block copolymer in the compound with SMA/PBT resin (Blends 22, 18 and 23). The solid circles represent the other SMA/PBT/block polymer blends with and without oil. The binary blends of SMA and block polymer (1 to 5) and the two blends containing EPDM (19 and 20) have been omitted. Although all of the compounds in the drawing possess excellent cold impact strength, the impact strength is observed to decrease with increasing stiffness within the compositional series. All of the blends are approximately bounded by two dashed lines of negative slope. An unexpected result in the constant impact strength exhibited by the 5% oil system at high stiffness, even though the blends possess lower concentrations of block copolymer than their unoiled counter parts at similar stiffness.

TABLE 1a

| Blend number | 1 | 2 | 3 | 4 | 5 | 6 | 7 | 8 |
|---|---|---|---|---|---|---|---|---|
| *Formulation (per cent by weight)* | | | | | | | | |
| Block copolymer 1 | 18 | — | — | — | 36 | 30 | 30 | 18 |
| Block copolymer 2 | 42 | — | — | — | 24 | 20 | 20 | 12 |
| Block copolymer 3 | — | 60 | 48 | 36 | — | — | — | — |
| SMA/1 | 40 | 40 | 32 | 24 | 40 | 40 | 30 | 18 |
| $CaCO_3$ | — | — | 20 | 40 | — | — | — | 40 |
| PBT | — | — | — | — | — | 10 | 20 | 12 |
| *Properties* | | | | | | | | |
| −29°C Cold Impact Strength, Kg. m/m | 718 | 718 | 308 | 211 | 173 | 227 | 292 | 216 |
| Stiffness, $kg.cm^{-2}/rad$ | 2450 | 1645 | 1533 | 1925 | 2205 | 3430 | 2919 | 3577 |
| Hardness (Shore "D"), instantaneously/ after 10 sec. | 54/51 | 52/46 | 49/43 | 50/47 | 53/47 | 60/53 | 56/53 | 56/51 |
| Angle tear, kg/cm | 97 | 92.5 | 79 | 72 | 86 | 106 | 110 | 87 |
| Tensile break, //, $kg/cm^2$ | 177 | 185.5 | 185.5 | 155 | 173 | 195 | 194 | 178.5 |
| break, ⊥, $kg/cm^2$ | 243 | 225.5 | 201 | 132 | 157 | 163 | 203 | 150.5 |
| % elongation, // | 170 | 210 | 190 | <100 | 140 | 100 | 170 | <100 |
| % elongation, ⊥ | 370 | 420 | 330 | 230 | 260 | 180 | 310 | <100 |
| Direct Paint Adhesion Test. | Pass | P | P | P | P | P | P | P |
| Bake cycle 30 min. 121°C. | Fail | F | F | F | F | F/P | F/P | P |
| Paint Adhesion Test following 10 day watersoak at 38°C | — | — | — | — | — | P | P | P |

TABLE Ib

| Blend number | 9 | 10 | 11 | 12 | 13 | 14 | 15 |
|---|---|---|---|---|---|---|---|
| *Formulation (per cent by weight)* | | | | | | | |
| Block copolymer 1 | 36 | 36 | 32.4 | 31.2 | 30 | 27 | 30 |
| Block copolymer 2 | 24 | 24 | 21.6 | 20.8 | 20 | 18 | 20 |
| SMA/2 | 30 | 20 | 20 | 20 | 20 | 20 | 20 |
| PBT | 10 | 20 | 20 | 20 | 20 | 20 | 20 |
| Oil | — | — | 1 | 3 | 3 | — | — |
| EPDM | — | — | — | — | — | 15 | 10 |
| LDPE | — | — | 5 | 5 | 7 | — | — |
| *Properties* | | | | | | | |
| −29°C Cold Impact Strength, Kg. m/m | 443 | 454 | 540 | 362 | 211 | 346 | 659 |
| Stiffness, $kg.cm^{-2}/rad$ | 2142 | 1848 | 1673 | 1736 | 1659 | 1631 | 1232 |
| Hardness (Shore "D"), instantaneously/ after 10 sec. | 49/44 | 46/44 | 49/46 | 53/46 | 50/43 | 45/39 | 42/36 |
| Angle tear, kg/cm | 80 | 80.5 | 72 | 71.5 | 68.5 | 55.5 | 60 |
| Tensile break, //, $kg/cm^2$ | 174 | 212 | 166 | 149 | 136.5 | 112 | 105 |
| break, ⊥, $kg/cm^2$ | 187 | 236 | 138 | 122.5 | 115.5 | 86 | 98 |
| % elongation, // | 130 | 290 | 230 | 180 | 150 | 80 | 80 |
| % elongation, ⊥ | 330 | 370 | 230 | 200 | 190 | 80 | 130 |
| Direct Paint Adhesion Test. | Pass | P | P | P | P | P | P |
| Bake cycle 30 min. 121°C. | P | P | P | P | P | P | P |
| Paint Adhesion Test following 10 day watersoak at 38°C | P | P | P | P | P | P | P |

TABLE 1b (cont'd)

| Blend number | 16 | 17 | 18 | 19 | 20 | 21 | 22 | 23 |
|---|---|---|---|---|---|---|---|---|
| *Formulation (per cent by weight)* | | | | | | | | |
| Block copolymer 1 | 60 | 58.2 | 57 | 55 | 50 | 54 | 66.6 | 47.6 |
| Block copolymer 2 | — | — | — | — | — | — | — | — |
| SMA/2 | 20 | 19.4 | 19 | 20 | 20 | 18 | 14.2 | 23.8 |
| PBT | 20 | 19.4 | 19 | 20 | 20 | 18 | 14.2 | 23.6 |
| Oil | — | 3.0 | 5 | — | — | 10 | 5 | 5 |
| EPDM | — | — | — | 5 | 10 | — | — | — |
| LDPE | — | — | — | — | — | — | — | — |
| *Properties* | | | | | | | | |
| −29°C Cold Impact Strength, Kg. m/m | 448 | 711 | 961 | 659 | 842 | 886 | 896 | 961 |
| Stiffness, kg.cm$^{-2}$/rad | 1521 | 1407 | 1176 | 1659 | 1575 | 854 | 763 | 1687 |
| Hardness (Shore "D"), instantaneously/ after 10 sec. | 48/44 | 45/42 | 41/38 | 48/43 | 45/40 | 37/33 | 39/35 | 46/43 |
| Angle tear, kg/cm | 107 | 113.5 | 87 | 116 | 90.5 | 70 | 76.5 | 96 |
| Tensile break, //, kg/cm$^2$ | 222 | 198 | 173 | 164.5 | 138 | 103 | 170 | 170 |
| break, ⊥, kg/cm$^2$ | 168 | 208 | 189 | 194 | 154 | 105 | 198 | 108.5 |
| % elongation, // | 390 | 455 | 400 | 305 | 200 | 300 | 370 | 290 |
| % elongation, ⊥ | 360 | 440 | 515 | 460 | 400 | 410 | 520 | 120 |
| Direct Paint Adhesion Test. | Pass | P | P | P | P | P | P | P |
| Bake cycle 30 min. 121°C. | P | P | P | P | P | P | P | P |
| Paint Adhesion Test following 10 day watersoak at 38°C | P | P | P | P | P | P | P | P |

**Claims**

1. A thermoplastic moulding composition comprising:—

a) 0 to 80% by weight of a vinylaromatic copolymer comprising a vinylaromatic compound and an α,β-unsaturated cyclic anhydride, and

b) 10 to 80% by weight of a thermoplastic polyester having a molecular weight in excess of 20,000 and selected from the group consisting of a condensation product of a dicarboxylic acid and a glycol, pivalolactone homopolymer and copolymer and polycaprolactone having a melting point over 120° and c) 10 to 80% by weight of a modified block copolymer comprising vinylaromatic and diene blocks characterized in that the composition comprises a selectively hydrogenated block copolymer c, comprising at least two monoalkenylarene polymer end blocks A and at least one hydrogenated conjugated diene polymer mid block B, wherein the weight per cent of blocks A is between 8 to 65 per cent by weight of the block copolymer and wherein the block B has been hydrogenated substantially completely.

2. A composition according to claim 1, characterized in that the selectively hydrogenated block copolymer is a linear ABA block copolymer.

3. A composition according to claim 1, characterized in that the selectively hydroganated block copolymer is a radial $(AB)_x$—BA block copolymer.

4. A composition according to claims 1 and 2, characterized in that the vinylaromatic copolymer is a styrene-maleic anhydride copolymer.

5. A composition according to any one of the preceding claims, characterized in that the thermoplastic polyester is a condensation product of a dicarboxylic acid and a glycol.

6. A composition according to claim 5, characterized in that the thermoplastic polyester is poly(butylene terephthalate).

7. A composition according to any one of the preceding claims, characterized in that the composition comprises:—

(a) 15 to 40 weight per cent vinylaromatic copolymer,

(b) 15 to 40 weight per cent thermoplastic polyester, and

(c) 30 to 70 weight per cent block copolymer.

**Patentansprüche**

1. Thermoplastische Formmasse, umfassend

a) 10 bis 80 Gew.-% eines vinylaromatischen Copolymers, aus einer vinylaromatischen Verbindung und einem α, β-ungesättigten cyclischen Anhydrid, und

b) 0 bis 80 Gew.-% eines thermoplastischen Polyesters mit einem Molekulargewicht über 20 000 und ausgewählt aus der Gruppe, bestehend aus einem Kondensationsprodukt einer 2-wertigen Carbonsäure mit einem Glykol, Pivalolacton-Homopolymer und Copolymer und Polycaprolacton mit einem Schmelzpunkt >120°C, und

c) 10 bis 80 Gew.-% eines modifizierten Blockcopolymers, umfassend vinylaromatische Blöcke und Dienblöcke, dadurch gekennzeichnet, daß die Masse ein selektiv hydriertes Blockcopolymer c) umfaßt, enthaltend mindestens 2 Monoalkenylaryl-Polymerendblöcke A und mindestens einen Polymermittelblock B aus einem hydrierten konjugierten Dienpolymer, wobei der prozentuale Gewichtsanteil der Blöcke A zwischen 8 und 65 Gew.-%, bezogen auf das Blockcopolymer, liegt und der Block B im wesentlichen vollständig hydriert ist.

2. Masse nach Anspruch 1, dadurch gekennzeichnet, daß das selektiv hydrierte Blockcopolymer ein lineares ABA Blockcopolymer ist.

3. Masse nach Anspruch 1, dadurch gekennzeichnet, daß das selektiv hydrierte Blockcopolymer ein radiales $(AB)_x$—BA Blockcopolymer ist.

4. Masse nach Anspruch 1 und 2, dadurch gekennzeichnet, daß das vinylaromatische Copolymer ein Styrol-Maleinsäureanhydrid-Copolymer ist.

5. Mass nach einem der vorangehenden Ansprüche, dadurch gekennzeichnet, daß der thermoplastische Polyester ein Kondensationsprodukt aus einer Dicarbonsäure und einem Glykol ist.

6. Mass nach Anspruch 5, dadurch gekennzeichnet, daß der thermoplastische Polyester Poly(butylenterephthalat) ist.

7. Mass nach einem der vorangehenden Ansprüche, dadurch gekennzeichnet, daß die sie umfaßt

a) 15 bis 40 Gew.-% vinylaromatisches Copolymer

b) 15 bis 40 Gew.-% thermoplastischen Polyester und

c) 30 bis 70 Gew.-% Blockcopolymer.

**Revendications**

1. Une composition à mouler thermoplastique comprenant:

a) 10 à 80% en poids d'un copolymère vinylaromatique comprenant un composé vinylaromatique et un anhydride cyclique insaturé en alpha, bêta,

b) 10 à 80% en poids d'un polyester thermoplastique ayant un poids moléculaire de plus de 20 000 et

choisi dans le groupe constitué par un produit de condensation d'un acide dicarboxylique et d'un glycol, un homopolymère ou copolymère de pivalolactone et une polycaprolactone, ayant un point de fusion au-dessus de 120°C et

c) 10 à 80% en poids d'un copolymère séquencé modifié comprenant des blocs vinylaromatiques et des blocs de diéne caractérisé en ce que la composition comprend un copolymère séquencé c) sélectivement hydrogéné comprenant au moins deux blocks terminaux A de polymère de monoalcénylarène et au moins un bloc intermédiaire B de polymère de diène conjugué hydrogéné, où le pourcentage en poids de blocs A est compris entre 8 et 65% en poids du compolymère séquencé et le bloc B a été hydrogéné de manière sensiblement complète.

2. Un composition selon la revendication 1, caractérisée en ce que le copolymère séquencé sélectivement hydrogéné est un copolymère séquencé linéaire ABA.

3. Un composition selon la revendication 1, caractérisée en ce que le copolymère séquencé sélectivement hydrogéné est un copolymère séquencé radial $(AB)_x$—BA.

4. Un composition selon les revendications 1 et 2, caractérisée en ce que le copolymère vinylaromatique est un copolymère styrène-anhydride maléique.

5. Une composition selon l'une quelconque des revendications précédentes, caractérisée en ce que le polyester thermoplastique est un produit de condensation d'un acide dicarboxylique et d'un glycol.

6. Une composition selon la revendication 5, caractérisée en ce que le polyester thermoplastique est du poly(butylène téréphtalate).

7. Une composition selon l'une quelconque des revendications précédentes, caractérisée en ce que la composition comprend:

a) 15 à 40% en poids de copolymère vinylaromatique,

b) 15 à 40% en poids de polyester thermoplastique et

c) 30 à 70% en poids de copolymère séquencé.

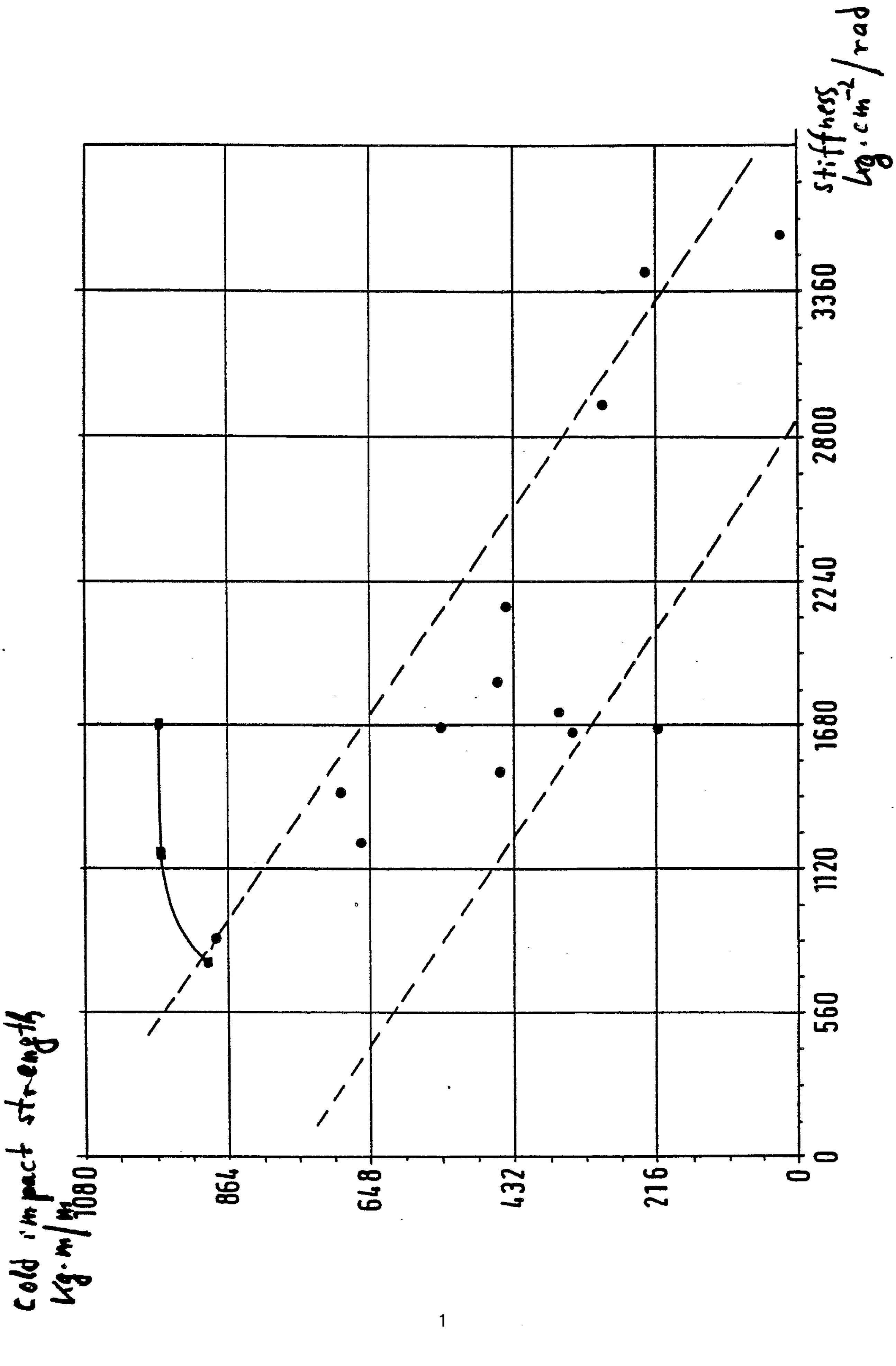
Cold impact strength
kg·m/m
1080
864
648
432
216
0
stiffness
kg·cm⁻²/rad
560
1120
1680
2240
2800
3360

1